# EUROPÄISCHE PATENTSCHRIFT

(11) **EP 1 841 971 B1**
(45) Veröffentlichungstag und Bekanntmachung des Hinweises auf die Patenterteilung: **23.03.2011**
(21) Anmeldenummer: 06707697.6
(22) Anmeldetag: 10.01.2006
(51) Int. Cl.: F16B 21/18, F16L 37/088

(54) **WELLENAXIALBEFESTIGUNG MITTELS EINES DRAHTBÜGELS**
AXIAL FIXATION OF A SHAFT USING A WIRE CLIP
FIXATION AXIALE D'UN ARBRE PAR L'INTERMEDIAIRE D'UN ETRIER METALLIQUE

(30) Priorität: 20.01.2005 DE 102005002853
(43) Veröffentlichungstag der Anmeldung: 10.10.2007
(73) Patentinhaber: Johnson Controls GmbH, 51399 Burscheid (DE)
(72) Erfinder: OTTO, Jürgen, 51399 Burscheid (DE); REGINOLD, Kirubaharan Albert, 51399 Burscheid (DE)
(74) Vertreter: Wolff, Felix
(86) Internationale Anmeldenummer: PCT/EP2006/050131
(87) Internationale Veröffentlichungsnummer: WO 2006/077187

(56) Entgegenhaltungen:
- GB-A- 1 303 475
- US-A- 2 260 712
- US-A- 4 009 896
- US-A- 5 909 901

## Beschreibung

Die vorliegende Erfindung betrifft eine Vorrichtung zur axialen Festlegung eines Bolzens oder einer Welle in einem Bauteil oder zur axialen Festlegung eines Bauteils auf einem Bolzen oder einer Welle. Des weiteren betrifft die vorliegende Erfindung eine Armlehne und einen Sitz, insbesondere einen Fahrzeugsitz.

Die derartige Vorrichtung ist beispielsweise in der deutschen Patentschrift DE 199 04 713 C1 sowie in der US-A-5 909 901, welche den nächstliegenden Stand der Technik darstellt und den Oberbegriff des Anspruchs 1 offenbart, und in der US-A-2 260 712 beschrieben. Diese Vorrichtung hat jedoch den Nachteil, dass sie nur mit einem speziellen Werkzeug lösbar ist, was zum einen einen erhöhten Montageaufwand bedeutet und zum anderen eine Verwendung der Vorrichtung bei beschränkten räumlichen Verhältnissen verbietet. Diesen Nachteil weist die Vorrichtung zur axialen Festlegung mit einem Bolzen bzw. einer Hohlwelle, mit einer äußeren bzw. inneren radialen Nut sowie mit einer über ihren Umfang verteilt nach innen bzw. nach außen ragenden Zungen versehenen Sicherheitsvorrichtung, wobei die Zungen mit der Nut in lösbaren Eingriff bringbar sind ,nicht auf. Diese Vorrichtung ist ohne Werkzeuge lösbar. Bei der mit Zungen versehenen Sicherheitsvorrichtung handelt es sich jedoch um ein vergleichsweise schwierig herzustellendes, scharfkantiges Bauteil.

Es war deshalb die Aufgabe der vorliegenden Erfindung, eine Vorrichtung zur axialen Festlegung eines Bolzens oder einer Welle in einem Bauteil oder zur axialen Festlegung eines Bauteils auf einem Bolzen oder einer Welle zur Verfügung zu stellen, die die Nachteile des Standes der Technik nicht aufweist.

Gelöst wird die Aufgabe mit einer Vorrichtung gemäß Patentanspruch 1

Es war für den Fachmann überaus erstaunlich und nicht zu erwarten, dass mit einem einfachen Drahtgebilde eine Vorrichtung zur axialen Festlegung eines Bolzens oder einer Welle in einem Bauteil oder zur axialen Festlegung eines Bauteils auf einer Welle realisiert werden kann. Die erfindungsgemäße Vorrichtung ermöglicht die Sicherung eines Bolzens oder einer Welle und das Lösen eines Bolzens oder einer Welle ohne Werkzeug durch Verdrehung des Mittels und der Sicherungsvorrichtung relativ zueinander. Die erfindungsgemäße Vorrichtung ist einfach und kostengünstig herzustellen. Es weist keine Scharfen Kanten auf, so dass der Verschleiß der erfindungsgemäßen Vorrichtung gering ist

Erfindungsgemäß ist die Sicherungsvorrichtung ein Drahtgebilde. Das Drahtgebilde weist keine Scharfen Kanten auf, so dass der Verschleiß der erfindungsgemäßen Vorrichtung gering ist. Vorzugsweise ist die Sicherheltseinrichturlg in einer ersten Drehstellung axial abziehbar und In mindestens einer zweiten Drehstellung im Wesentlichen axial unlösbar mit dem Bolzen bzw. der Welle verbindbar. Für den axialen Abzug steht vorzugsweise ein Lösungsbereich zur Verfügung, bei dem der Form- und/oder Kraftschluss zwischen dem Mittel und der Sicherung vermindert ist.

Erfindungsgemäß weist die erfindungsgemäße Vorrichtung ein Mittel auf, das an der Welle oder dem Bolzen angeordnet ist und das mit der Sicherungsvorrichtung form- und/oder kraftschlüssig jedoch lösbar in Eingriff bringbar ist. Als Mittel eignet sich jede Ausführungsform, die geeignet ist eine formschl0ssige, lösbare Verbindung mit der Sicherungsvorrichtung einzugehen. Beispielhaft sei hier ein Absatz genannt. Vorzugsweise handelt es sich bei dem Mittel jedoch um eine Nut. Das Mittel, beispielweise die Nut, kann am Umfang der Welle oder des Bolzens oder in dessen Innerem, beispielsweise in einer Höhlwelle, angeordnet sein. Vorzugsweise ist in diesem Fall das Sicherungsmittel ebenfalls innerhalb der Welle oder des Bolzens angeordnet.

Vorzugsweise ist zumindest ein Schenkel dieser Nut im Lösungsbereich zumindest teilweise abgeflacht, so dass die Sicherungsvorrichtung und damit der Form- und/oder Kraftschluss zwischen der Nut und der Sicherungsvorrichtung an dieser Stelle einfach gelöst und die Sicherungsvorrichtung aus der Nut gezogen werden kann. Ganz besonders bevorzugt schließt sich an den abgeflachten Teil eine vorzugsweise konische Rampe an, entlang derer die Vorrichtung dann bewegt werden kann, um den Kraft- und/oder Formschluss mit der Sicherungsvorrichtung weiter zu vermindern, so dass der Bolzen oder die Welle aus der Sicherungsvorrichtung entfernt werden kann.

Vorzugsweise handelt es sich bei der Sicherungsvorrichtung um ein im Wesentlichen U-förmig gestaltetes Bauteil, das den Bolzen oder die Welle teilweise umschließt und dessen Schenkel ganz besonders bevorzugt vorgespannt sind.

Vorzugsweise ist die erfindungsgemäße Vorrichtung Teil einer Halterung, in der ein Bolzen oder eine Welle besonders bevorzugt drehbar gelagert ist.

Ein weiterer Gegenstand der vorliegenden Erfindung ist eine Armlehne, insbesondere für Kraftfahrzeuge, die mit einer Welle verbunden ist, die in einer Halterung gelagert ist, die die erfindungsgemäße Vorrichtung aufweist.

Vorzugsweise ist die Armlehne drehfest mit der Welle verbunden und die Welle drehbar in der ortsfesten Halterung gelagert.

Weiterhin bevorzugt ist die Armlehne in Ihren Gebrauchsstellungen unlösbar und in mindestens einer Zwischenstellung lösbar mit der Halterung verbunden. Die Halterung ist wiederum bevorzugt Teil eines Sitzes, insbesondere eines Fahrzeugsitzes.

Ein weiterer Gegenstand der vorliegenden Erfindung ist ein Sitz, insbesondere ein Fahrzeugsitz, der die erfindungsgemäße Vorrichtung oder die erfindungsgemäße Armlehne aufweist.

Im Folgenden werden die Erfindungen anhand der **Figuren 1- 6** erläutert. Diese Erläuterungen sind lediglich beispielhaft und schränken den Erfindungsgedanken nicht ein.
- **Figur 1**: zeigt einen Fahrzeugsitz mit einer Armlehne, die mittels einer erfindungsgemäßen Vorrichtung axial festgelegt ist.
- **Figur 2**: zeigt den Fahrzeugsitz gemäß Figur 1 beim Lösen der Armlehne.
- **Figur 3**: zeigt eine Ausführungsform der erfindungsgemäßen Vorrichtung in einer Stellung, in der der Bolzen nicht aus der Halterung ziehbar ist.
- **Figur 4**: zeigt eine perspektivische Darstellung der Vorrichtung gemäß Figur 3.
- **Figur 5**: zeigt die erfindungsgemäße Vorrichtung in einer Position, in der der Bolzen von der Sicherungsvorrichtung nicht gesichert ist.
- **Figur 6**: zeigt eine perspektivische Darstellung der Vorrichtung gemäß Figur 5.

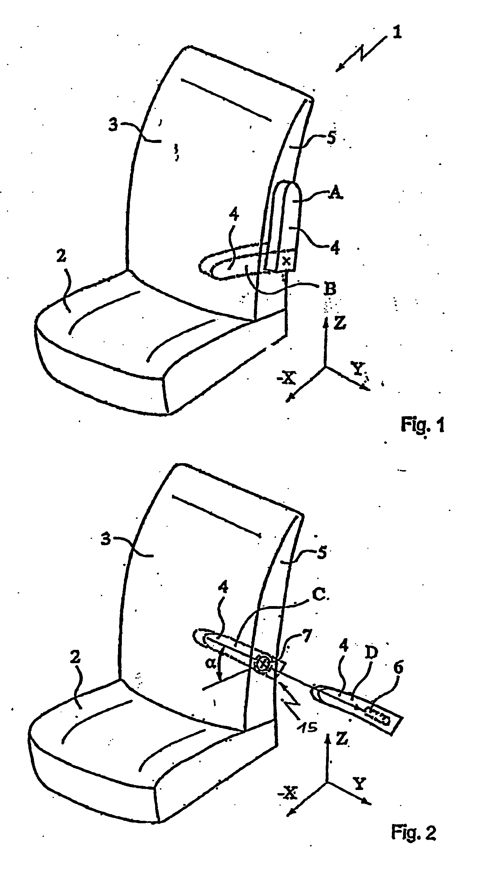

Der in **Figur 1** dargestellte Fahrzeugsitz 1 besteht aus einem Sitzteil 2 und einer Rückenlehne 3, die seitlich mit einer Armlehne 4 versehen ist. Die Armlehne kann von einer im Wesentlichen vertikalen Verstaustellung A, in der sie an der Seitenfläche 5 der Rückenlehne 3 anliegt in eine im Wesentlichen horizontale Gebrauchsstellung B geklappt werden. In beiden Positionen, die von der Armlehne 4 in der Praxis nicht nur kurzfristig eingenommen werden, ist sichergestellt, dass sich die Armlehne bei Auftreten seitlicher Kräfte (Y Richtung des Fahrzeugs) nicht von der Rückenlehne 3 löst und die Insassen des Fahrzeugs gefährdet.

In **Figur 2** ist die Armlehne 4 in einer Zwischenstellung C dargestellt, die zwischen der Verstaustellung A und der Gebrauchsstellung B liegt und in welche die Armlehne 4 bei verschwenken nur kurzfristig gelangt. Genau in dieser Stellung, die durch den Winkel α gekennzeichnet ist und die beispielsweise 45° betragen kann, kann die Armlehne 4 zur Seite hin (Y Richtung) aus der Rückenlehne heraus gezogen werden (Position D).

Durch diese Ausbildung wird sowohl im Normalgebrauch als auch im Falle eines Unfalls ausgeschlossen, dass sich die Armlehne 4 ungewollt löst. Die theoretische Möglichkeit, dass sich die Armlehne 4 bei einem Unfall manuell oder durch ihre Massenträgheit genau bis zu einem Winkel α verschwenkt und in diesem Moment seitlich belastet wird, ist in der Praxis ohne Belangen.

Wie aus der **Figur 2** ersichtlich, weist die Armlehne 4 ein, in Richtung der Rückenlehne 3 hervorstehenden, drehfest mit der Armlehne 4 verbundenen Bolzen 6 auf, der durch die Öffnung 7 in der Seitenfläche 5 in eine in der Rückenlehne fest angeordnete Halterung 15 , einschiebbar und dort axial feststellbar ist. Die Halterung 15 weist eine Sicherungseinrichtung auf. Der Aufbau der Sicherheitseinrichtung und ihr Zusammenwirken mit dem Bolzen 6 wird in den folgenden Figuren im Detail dargestellt.

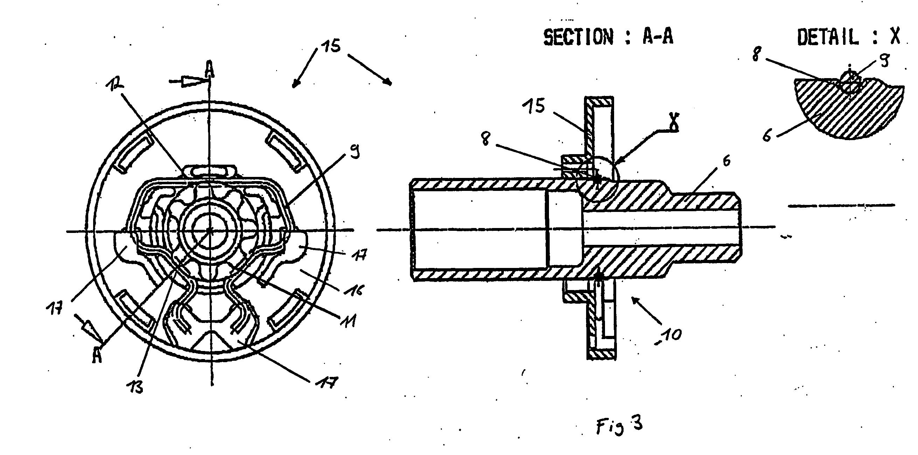

**Figur 3** zeigt eine Halterung 15 in zwei Ansichten und einer Detailzeichnung. Die Halterung 15 weist ein Gehäuseteil 16 auf. An diesem Gehäuseteil 16 ist die Sicherungsvorrichtung 9 im Wesentlichen drehfest, vorzugsweise vollständig drehfest angeordnet jedoch innerhalb der Halterung 17 beweglich. Die Sicherungsvorrichtung 9 ist in dem vorliegenden Fall ein im Wesentlichen U-förmig gestalteter Bügel, der aus einem runden elastischen Material, beispielsweise Stahldraht, gefertigt ist. Der Dieser U-förmig gestalteter Bügel weist einen im Wesentlichen starren Basisbereich auf, an den sich rechts uns Links zwei vergleichsweise flexible, teils elastisch deformierbare Schenkel anschließen. Der Bügel 9 liegt mit seinen Befestigungsbereichen 11-13 in der Nut 8, d.h., die Befestigungsbereiche 11-13 sind form- und/oder kraftschlüssig mit der Nut 8 verbunden und verhindern, dass der Bolzen 6 aus der Halterung 15 entfernbar ist.

Der Bolzen 6 ist drehbar gelagert d.h. er ist relativ zu der Sicherungsvorrichtung 9 verdrehbar. In Figur 3 ist der Bolzen 6 demnach durch die Sicherungsvorrichtung gegen axiale Verschiebung relativ zu der Halterung 15 und damit zu dem Sitz 1 gesichert. Die axiale Abzugskraft beträgt mehr als 200 N.

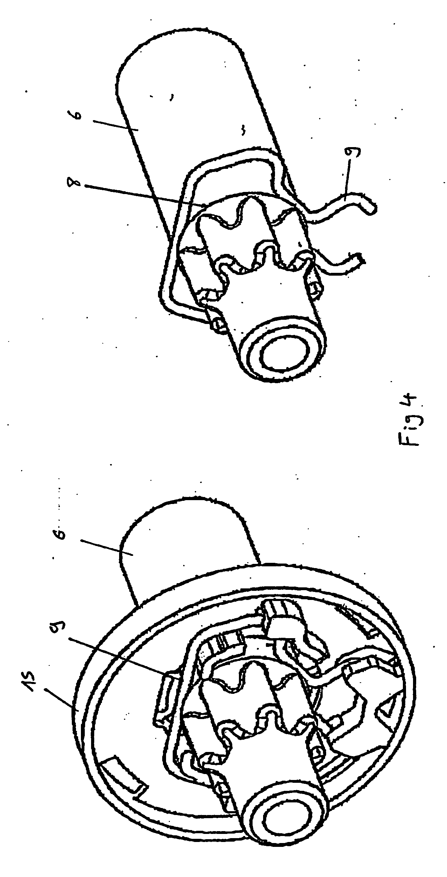

**Figur 4** zeigt die erfindungsgemäße Vorrichtung in dem in Figur 3 dargestellten gesicherten Zustand in einer perspektivischen Darstellung. Der Bügel 9 liegt an drei Stellen in der Nut 8 und verhindert somit eine axiale Bewegung des Bolzens, so dass der Bolzen nicht ungewollt aus der Halterung 15 entfernbar ist.

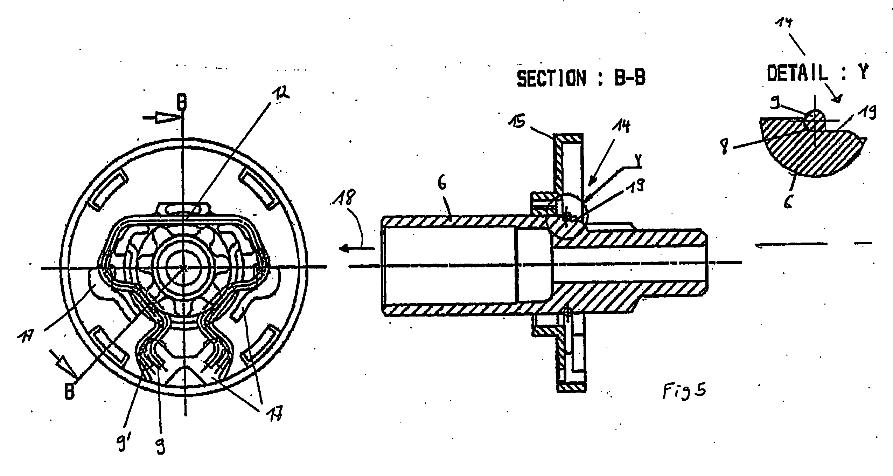

In **Figur 5** ist die erfindungsgemäße Vorrichtung gemäß den Figuren 3 und 4 jedoch im ungesicherten Zustand in zwei Ansichten und einer Detailzeichnung dargestellt. In dem vorliegenden Fall wurde der Bolzen 6 in die durch den Winkel α gekennzeichnete Stellung, beispielsweise 45° verdreht, bis sich der Lösungsbereich 14, mit dem Befestigungsbereich 12 überdeckt. In dem Lösungsbereich 14 ist (wie sehr schön im Detail Y erkennbar) eine Flanke der Nut abgeflacht bzw. entfernt, so dass in dem abgeflachten Bereich in eine Richtung (entgegen der durch Pfeil 18 gekennzeichneten Richtung) kein Form- und/oder Kraftschluss zwischen dem Bügel 9 und der Nut 8 gegeben ist. Des weiteren weist der Lösungsbereich 14 eine Rampe 19 auf, entlang derer der Bügel 9 bewegbar ist und die konisch gestaltet ist. Der Fachmann erkannt, dass diese Rampe 19 nicht notwendiger Weise vorhanden sein muss. Wird der Bolzen nun in der durch Pfeil 18 gekennzeichneten Richtung gezogen, bewegt sich der Befestigungsbereich 12 aus der Nut 8 heraus entlang der Rampe 19 heraus. Dadurch werden die Schenkel des Bügels entspannt und legen sich, in die durch das Bezugszeichen 9' gekennzeichnete Stellung, d. h. die Befestigungsbereiche 11, 13 lösen sich ebenfalls, zumindest teilweise, aus der Nut heraus, so dass mit einem vergleichsweise geringen Kraftaufwand der Bolzen 6 aus der Sicherungsvorrichtung 8 und damit aus der Halterung 15 entfernbar ist. Diese Demontage erfolgt ohne den Einsatz eines Werkzeuges. Die Montage der Armlehne erfolgt in umgekehrter Weise.

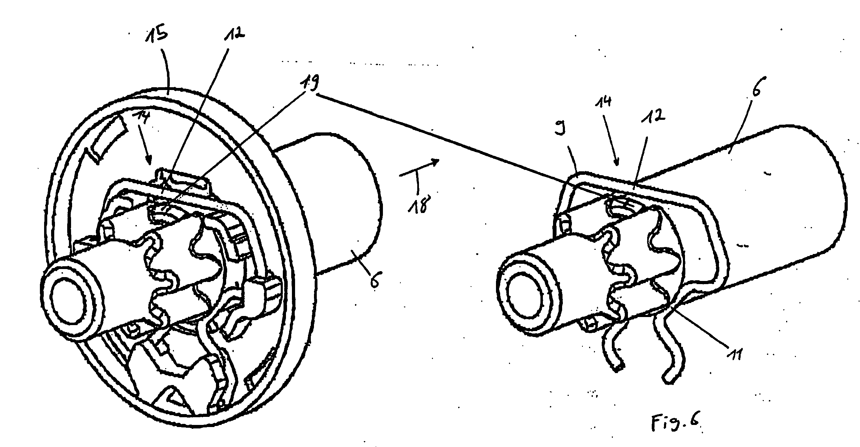

In **Figur 6** ist der ungesicherte Zustand der erfindungsgemäßen Vorrichtung perspektivisch dargestellt. In diesem Zustand kann der Bolzen 6 in der durch den Pfeil gekennzeichneten Richtung 18 aus der Sicherungsvorrichtung und damit aus der Halterung 15 gezogen werden. Es ist zu erkennen, dass die Rampe 19 konisch gestaltet ist. Wenn der Bolzen 6 in der durch den Pfeil 18 gekennzeichneten Richtung gezogen wird, verbiegen sich die flexiblen Schenkel des U-Profils, bewegen sich von dem Bolzen weg und die Sicherungsvorrichtung 9 kann aus der Nut 8 entfernt werden, ohne dass die Halterung oder der Sitz beschädigt wird.

Der Fachmann erkennt, das weder für das Lösen noch das Einstecken der Armlehne in den Sitz die Halterung zugänglich sein muß. Sie kann deshalb vollständig hinter einer Verkleidung oder einem Bezug angeordnet werden und ohne jegliches Werkzeug montiert oder demontiert werden.

### Bezugszeichenliste:

- 1: Fahrzeugsitz
- 2: Sitzteil
- 3: Rückenlehne
- 4: Armlehne
- 5: Seitenfläche
- 6: Bolzen
- 7: Öffnung
- 8: Mittel, Nut
- 9: Sicherungsvorrichtung, U-förmiger Bügel im gesicherten Zustand
- 9': Sicherungsvorrichtung im ungesicherten Zustand
- 10: Vorrichtung (zur axialen Festlegung)
- 11, 12, 13: Befestigungsbereich des Bügels 9 in der Nut 8
- 14: Lösungsbereich
- 15: Halterung
- 16: Gehäuseteil
- 17: Halterung des Bügels 9 an dem Gehäuse Teil 16
- 18: Pfeil
- 19: Rampe, konische Rampe

## Patentansprüche

1. Vorrichtung (10), zur axialen Festlegung eines Bolzen (6) oder einer Welle (6) in einem Bauteil (3) oder zur axialen Festlegung eines Bauteils auf einem Bolzen oder einer Welle, mit einem Mittel (8), das an der Welle oder dem Bolzen angeordnet ist und mit einer Sicherungsvorrichtung (9), die mit dem Mittel (8) form- und/oder kraftschlüssig sowie lösbar in Eingriff bringbar ist, wobei die zum Lösen der Sicherungsvorrichtung (9) erforderliche Axialkraft in Abhängigkeit von deren Drehstellung relativ zu dem Bolzen (6) oder der Welle (6) veränderbar ist und die Sicherungsvorrichtung (9) ein Drahtgebilde ist,**dadurch gekennzeichnet, dass** die Sicherungsvorrichtung (9) mindestens zwei Befestigungsbereiche (11-13) aufweist die gleichzeitig jedoch lösbar form- und/oder kraftschlüssig mit dem Mittel (8) in Eingreif bringbar sind und das Mittel (8) mindestens einen Lösungsbereich (14) aufweist, wobei die Anzahl der Befestigungsbereiche (11-13) größter ist als die Anzahl der Lösungsbereiche (14).

2. Vorrichtung nach Anspruch 1, **dadurch gekennzeichnet, dass** der Form- und/oder Kraftschluss zwischen dem Mittel (8) und der Sicherungsvorrichtung (9) im Lösungsbereich vermindert ist.

3. Vorrichtung nach einem der voranstehenden Ansprüche, **dadurch gekennzeichnet, dass** das Mittel (8) eine Nut ist.

4. Vorrichtung nach Anspruch 3, **dadurch gekennzeichnet, dass** die Nut (8) im Lösungsbereich (14) zumindest teilweise abgeflacht ist und dass sich an den abgeflachten Teil vorzugsweise eine Rampe (19) anschließt.

5. Vorrichtung nach einem der voranstehenden Ansprüche, **dadurch gekennzeichnet, dass** die Sicherungsvorrichtung (9) im wesentlichen U-förmig gestaltet ist.

6. Vorrichtung nach einem der voranstehenden Ansprüche, **dadurch gekennzeichnet, dass** die Sicherungsvorrichtung (9) vorgespannt ist.

7. Vorrichtung nach einem der voranstehenden Ansprüche, **dadurch gekennzeichnet, dass** sie Teil einer Halterung (15) ist, in der der Bolzen (6) oder die Welle (6) gelagert ist.

8. Armlehne (4) Insbesondere für ein Kraftfahrzeug, **dadurch gekennzeichnet, dass** sie mit einer Welle (6) verbunden ist, die in einer Halterung (15) gelagert ist, die eine Vorrichtung nach einem der voranstehenden Ansprüche aufweist.

9. Armlehne nach Anspruch 8, **dadurch gekennzeichnet, dass** sie drehfest mit der Welle (6) verbunden ist, die drehbar in der ortfesten Halterung (15) gelagert ist.

10. Armlehne nach einem der voranstehenden Ansprüchen, **dadurch gekennzeichnet, dass** sie in ihren Gebrauchsstellungen (A. B) unlösbar und in mindestens einer Zwisahenstellung (C) lösbar mit der Halterung (15) verbunden ist

11. Sitz, insbesondere Fahrzeugsitz aufweisend eine Vorrichtung nach einem der voranstehenden Ansprüche und/oder eine Armlehne nach einem der voranstehenden Ansprüche.

## Claims

1. Device (10) for the axial fixation of a bolt (6) or a shaft (6) in a component (3) or for the axial fixation of a component to a bolt or a shaft, by a means (8) which is arranged on the shaft or the bolt and by a securing device (9) which may be brought positively and/or non-positively as well as releasably into engagement with the means (8), the axial force required for releasing the securing device (9) being able to be altered depending on the rotational position thereof relative to the bolt (6) or the shaft (6), and the securing device (9) being a wire structure, **characterized in that** the securing device (9) comprises at least two fixing regions (11 - 13) which may, however, be simultaneously brought releaseably positively and/or non-positively into engagement with the means (8), and the means (8) comprises at least one release region (14), the number of fixing regions (11 - 13) being greater than the number of release regions (14).

2. Device according to Claim 1, **characterized in that** the positive and/or non-positive connection between the means (8) and the securing device (9) is reduced in the release region.

3. Device according to one of the preceding claims, **characterized in that** the means (8) is a groove.

4. Device according to Claim 3, **characterized in that** the groove (8) is at least partially flattened in the release region (14) and **in that** preferably a ramp (19) is attached to the flattened part.

5. Device according to one of the preceding claims, **characterized in that** the securing device (9) is of substantially U-shaped form.

6. Device according to one of the preceding claims, **characterized in that** the securing device (9) is pretensioned.

7. Device according to one of the preceding claims, **characterized in that** it is part of a holder (15) in which the bolt (6) or the shaft (6) is mounted.

8. Armrest (4) especially for a motor vehicle, **characterized in that** it is connected to a shaft (6) which is mounted in a holder (15) which comprises a device according to one of the preceding claims.

9. Armrest according to Claim 8, **characterized in that** it is connected fixedly in terms of rotation to the shaft (6) which is rotatably mounted in the fixed holder (15).

10. Armrest according to one of the preceding claims, **characterized in that** it is unreleasably connected to the holder (15) in its positions of use (A, B) and is releasably connected thereto in at least one intermediate position (C).

11. Seat, especially vehicle seat comprising a device according to one of the preceding claims, and/or an armrest according to one of the preceding claims.

## Revendications

1. Dispositif (10) pour fixer axialement un boulon (6) ou un arbre (6) dans un composant (3) ou pour fixer axialement un composant sur un boulon ou un arbre, avec un moyen (8) disposé contre l'arbre ou le boulon et avec un dispositif de sûreté (9) pouvant être amené en prise avec le moyen (8) par complémentarité de formes et/ou de forces et pouvant en être détaché, la force axiale nécessaire au détachement du dispositif de sûreté (9) pouvant varier en fonction de la position de rotation par rapport au boulon (6) ou à l'arbre (6) et le dispositif de sûreté (9) étant un élément en fil métallique, **caractérisé en ce que** le dispositif de sûreté (9) comporte au moins deux zones de fixation (11 - 13) pouvant être amenées simultanément en prise par complémentarité de formes et/ou de forces avec le moyen (8) tout en en étant détachables et le moyen (8) comportant au moins une zone de détachement (14), le nombre de zones de fixation (11 - 13) étant supérieur au nombre de zones de détachement (14).

2. Dispositif selon la revendication 1, **caractérisé en ce que** la complémentarité de formes et/ou de forces entre le moyen (8) et le dispositif de sûreté (9) est réduite dans la zone de détachement.

3. Dispositif selon l'une quelconque des revendications précédentes, **caractérisé en ce que** le moyen (8) est un écrou.

4. Dispositif selon la revendication 3, **caractérisé en ce que** l'écrou (8) est au moins en partie aplati dans la zone de détachement (14) et **en ce qu'**une rampe (19) se rattache de préférence à la partie aplatie.

5. Dispositif selon l'une quelconque des revendications précédentes, **caractérisé en ce que** le dispositif de sûreté (9) prend pour l'essentiel une forme en U.

6. Dispositif selon l'une quelconque des revendications précédentes, **caractérisé en ce que** le dispositif de sûreté (9) est précontraint.

7. Dispositif selon l'une quelconque des revendications précédentes, **caractérisé en ce qu'**il fait partie d'un support (15) dans lequel le boulon (6) ou l'arbre (6) sont disposés.

8. Accoudoir (4), notamment pour un véhicule automobile, **caractérisé en ce qu'**il est relié à un arbre (6) disposé dans un support (15) comportant un dispositif selon l'une quelconque des revendications précédentes.

9. Accoudoir selon la revendication 8, **caractérisé en ce qu'**il est relié fixement sans rotation à l'arbre (6) disposé de façon tournante dans le support (15) fixe.

10. Accoudoir selon l'une quelconque des revendications précédentes, **caractérisé en ce qu'**il ne peut être détaché dans ses positions d'utilisation (A, B) et est relié de façon détachable au support (15) dans au moins une position intermédiaire (C).

11. Siège, notamment siège de véhicule, comportant un dispositif selon l'une quelconque des revendications précédentes et/ou un accoudoir selon l'une quelconque des revendications précédentes.
